# EUROPEAN PATENT SPECIFICATION

(11) **EP 0 493 077 B1**
(45) Date of publication and mention of the grant of the patent: **02.04.1997**
(21) Application number: 91311962.4
(22) Date of filing: 23.12.1991
(51) Int. Cl.: C08G 63/672

(54) **Mouldable polyester resin having high melting heat stability and moulded article produced therefrom**
Formbares Polyesterharz mit hoher Stabilität gegen Schmelzwärme und daraus hergestellte Formteile
Résine de polyester moulable ayant une grande stabilité à la chaleur de fusion et produits de moulage ainsi obtenus

(30) Priority: 28.12.1990 JP 408782/90
(43) Date of publication of application: 01.07.1992
(73) Proprietor: POLYPLASTICS CO. LTD., Chuo-Ku Osaka-shi Osaka 541 (JP)
(72) Inventor: Kanaka, Keiichi, Fuji-shi, Shizuoka (JP); Hijikata, Kenji, Mishima-shi, Shizuoka (JP)
(74) Representative: Jackson, Peter

(56) References cited:
- EP-A- 0 371 824
- EP-A- 0 401 123
- US-A- 3 794 617
- US-A- 4 067 850
- US-A- 4 398 017
- PATENT ABSTRACTS OF JAPAN vol. 6, no. 219 (C-132), 2 November 1982; & JP-A-57121032 (TOYO BOSEKI KK) 28.07.1982

## Description

The present invention relates to a moldable polyester resin having improved thermal stability. In particular, the present invention relates to a high quality resin which has a high thermal stability in a molten state in an extrusion or molding step and which is free from the formation of decomposition products from the resin or bleeding of foreign matter. The invention also provides a molding produced from the resin, particularly an extrusion molding such as film or sheet, and having an excellent surface appearance.

Crystalline thermoplastic polyester resins such as polyalkylene terephthalate resins having excellent mechanical, electrical, physical and chemical properties and processability are widely used as engineering plastics in the fields of automobile, electrical and electronic components. Typical examples of the polyalkylene terephthalate resins now used for these purposes include polyethylene terephthalate (PET) and polybutylene terephthalate (PBT).

As such resins have become more widely used a demand has arisen for further improved or special properties, or higher quality. One resin which has recently attracted increased attention is polycyclohexylenedimethylene terephthalate (PCT), having a thermal resistance higher than that of the above-described PET or PBT. This resin is synthesized from 1,4-cyclohexanedimethanol as an alkylene glycol. Since this resin has a melting point of as high as 290 to 310°C, it is potentially a polyester resin having a good resistance to high temperatures.

However, PCT has a poor thermal stability in the molten state, since its melting point is very close to its thermal decomposition point. Indeed, severe deterioration of the resin in molten state in an extrusion or molding step makes for difficulties in the production of moldings having a satisfactory quality.

Further, due to PCT's low heat stability when, for example, it is melted, extruded through a slit-shaped nozzle and solidified by passing through a cooling roll to form a film, its decomposition products, such as terephthalic acid, or an exudate adhere to the nozzle or cooling roll, thereby roughening the film surface and reducing the surface gloss. To avoid such quality reduction the roll and nozzle must be frequently cleaned, thereby complicating the operation.

To solve the above-described problem, various low molecular weight additives such as antioxidants and catalyst deactivators have been used heretofore. Although the thermal stability of the polyester resin per se is improved by the incorporation of such an additive, troubles such as exudation of the additive per se and reduction in the surface gloss due to the additive are often caused. Thus a development of a further improved method solving the problem has been eagerly demanded.

US patent 4067850 relates to the provision of polyester filaments and fibres that can be easily dyed without using a carrier. It describes and claims filaments and fibres comprising terephthalic acid copolyesters containing 4 to 15% by weight of bis-ethoxylated tetramethylbisphenol A in chemically co-condensed form. The filaments and fibres containing this phenolic constituent show an outstanding affinity for dyes in the absence of carriers. Another constituent of the copolyester is cyclohexyldimethanol.

US patent 3794617 relates to flame-retardant fibre-forming copolyesters comprising the condensation product of a diol, an acid or ester of a dicarboxylic acid (selected from terephthalic acid, isophthalic acid and saturated aliphatic dibasic acids containing 2 to 10 carbon atoms) and a defined brominated aromatic diol. Examples of other constituents of the copolyester are cyclohexyldimethanol and ethoxylated tetramethylbisphenol A.

After intensive investigations made for the purpose of solving the above-described heat stability problem, the inventors have found that surprisingly an aromatic copolyester having a high quality and melting heat stability can be obtained without significantly impairing other properties by introducing a small amount of a specified comonomer unit into PCT, that bleeding out of decomposition products such as terephthalic acid is only slight and no deposit is formed in the molding apparatus in the melt extrusion and molding steps. The present invention has been completed on the basis of this finding.

Thus the present invention relates to a moldable polyester resin comprising
(a) an aromatic dicarboxylic acid or its ester-forming derivative, and
(b) an aliphatic dihydroxy component containing at least 35 mole % of 1,4-cyclohexanedimethanol, which resin is produced by copolymerizing components (a) and (b) with
(c) an ester-forming diol compound of the following general formula (I) in such an amount that 0.1 to 30 mole % thereof, based on the aromatic dicarboxylic acid group, is introduced into said resin,

   HO-R-0-A-0-R-OH (I)

   wherein A represents a divalent organic radical selected from the groups 2,2-bis(4-phenylene) propane,
   4,4'-biphenylene, phenylene, oxy-4,4'-diphenylene or naphthylene and R is selected from an ethylene or isopropylene group.

The invention also provides a molding produced from the resin defined above.

Starting materials for the copolyesters of the present invention will now be described in detail in order.

The basic skeleton of the polyester resin of the present invention is formed by the polycondensation of an aromatic dicarboxylic acid or its ester-forming derivative (a) with an aliphatic dihydroxy compound (b) comprising at least 35 mole % of 1,4-cyclohexanedimethanol as the main components. Examples of the aromatic dicarboxylic acids and their ester-forming derivatives (a) used herein include known aromatic dicarboxylic acids such as terephthalic, isophthalic, naphthalenedicarboxylic and diphenyldicarboxylic acids as well as ester-forming derivatives thereof, such as dialkyl esters and diphenyl esters of these dicarboxylic acids and other diacylated compounds. They can be used either singly or in the form of a mixture of two or more of them.

The aliphatic dihydroxy compound (b) which is the other component constituting the basic skeleton of the polyester resin of the present invention comprises 1,4-cyclohexanedimethanol as the main ingredient in an amount of at least 35 mole % based on the component (b). If the amount of 1,4-cyclohexanedimethanol is below 35 mole %, the production of the polyester resin having a high thermal resistance is difficult. The amount of 1,4-cyclohexanedimethanol is preferably at least 50 mole %, more preferably at least 70 mole %, based on the component (b).

The cis- and trans-stereoisomers of 1,4-cyclohexanedimethanol having cyclohexane ring structures different from each other are known. Either isomer, or a mixture of them, may be used in the present invention. From the viewpoint of the thermal resistance of the obtained polyester resin, the weight ratio of the cis-isomer to the trans-isomer is preferably 40/60 to 0/100, more preferably 35/65 to 5/95.

Examples of the aliphatic dihydroxy compound (b) include, in addition to 1,4-cyclohexanedimethanol, aliphatic dihydroxy compounds such as ethylene glycol, propylene glycol, butanediol, neopentyl glycol, hexanediol, cyclohexanediol, diethylene glycol and triethylene glycol as well as substitution products of them. They can be used either singly or in the form of a mixture of two or more of them.

A small amount of a trifunctional monomer such as trimellitic acid, trimesic acid, pyromellitic acid, pentaerythritol or trimethylolpropane can be used in combination with them to form a polyester having a branched or crosslinked structure.

Another indispensable constituent unit of the copolyester of the present invention is an ester-forming diol compound (c) of the following general formula (I) and the introduction of this component (c) is a significant feature of the copolyester of the present invention:

HO-R-0-A-0-R-OH (I)

wherein A represents a divalent organic radical having at least one aromatic ring and R represents a divalent organic radical selected from among aliphatic hydrocarbon groups having 2 to 8 carbon atoms and polyoxyalkylene groups.

The divalent organic radicals A according to the invention are selected from 2,2-bis(4-phenylene)propane, 4,4'-biphenylene, phenylene, oxy-4,4'-diphenylene and naphthylene groups.

The divalent organic radical R in the general formula (I) is selected from ethylene and isopropylene groups.

Particularly preferred compounds as the constituent unit (I) include 2,2-bis[4-(2-hydroxyethoxy)phenylene]propane, 2,2-bis[4-(2-hydroxy-1-methylethoxy)phenylene]propane and 4,4'-bis(2-hydroxyethoxy)biphenyl.

The amount of the ester-forming diol compound (c) to be introduced is 0.1 to 30 mole %, preferably 0.5 to 20 mole % and most preferably 2.0 to 15 mole %, based on the aromatic dicarboxylic acid. If it is below 0.1 mole % no effect of the present invention is exhibited. On the contrary, if it exceeds 30 mole %, the melting point and crystallinity are significantly changed from those of the original polyester and, therefore, the thermal stability which is the greatest feature of the resin is seriously impaired and the intended effect of the present invention cannot be sufficiently exhibited.

In the present invention, the polyester resin having a high melting heat stability can be obtained by introducing a small amount of the specified comonomer component (c) in the production of the polyester mainly comprising the dicarboxylic acid component (a) and the aliphatic dihydroxy compound (b). Even when this resin is melted at a temperature suitable for molding, such as 330°C, in air for 20 min, a solid decomposition product formed in this step is at most 0.10% by weight, usually not more than 0.07% by weight, based on the resin. Thus the amount of the decomposition product is far smaller than that formed when no comonomer component (c) is used and the troubles such as the adhesion of the solid in the molding step can be removed, which is an unexpected feature of the present invention.

The copolyester resin can be produced by an ordinary process for producing polyesters. Namely, the copolymer can be obtained by heating the monomers at about 150 to 280°C in the presence of a catalyst to conduct esterification or transesterification and then polycondensation is conducted under reduced pressure while excess monomers or eliminated components are distilled off. The catalysts usable in this reaction are known catalysts usually used for the polycondensation of polyester, such as tetraalkoxytitanium compounds (e.g. tetrabutoxytitanium), metal salts of titanium oxalate (e.g. potassium titanium oxalate), tin compounds (e.g. dibutyltin oxide and dibutyltin laurate), metal acetates (e.g. zinc, lead, manganese and calcium acetates) and antimony compounds (e.g. antimony trioxide). They can be used either alone or in combination of two or more of them.

The molecular weight of the polymer (including oligomer) obtained by the melt polymerization or solution polymerization in the present invention can be increased by so-called solid phase polymerization wherein it is treated at a high temperature controlled so that the particles are not fused in a vacuum or in an inert gas for a predetermined period of time. The molecular weight is preferably 0.6 to 1.8, particularly 0.7 to 1.5, in terms of intrinsic viscosity.

The polyester of the present invention exhibits excellent properties in the absence of any additive. Particularly, it exhibits an improved thermal stability comparable to that obtained when an antioxidant is used. Accordingly, from the viewpoint of inhibition of the bleeding out, it is recommended not to use the antioxidant which per se usually bleeds out easily. However, suitable additives which do not inhibit the object of the present invention can be used for improving other properties if necessary. The additives include thermal stabilizers, ultraviolet absorbers, antistatic agents, flame retardants, flame-retarding assistants, colorants such as dyes or pigments, slip additives or lubricants for improving fluidity and mold release, crystallization accelerators (nucleating agents) and inorganic matter.

The resin of the present invention may further contain a small amount of another thermoplastic resin so far as the object of the invention is not inhibited. The thermoplastic resin usable herein may be any of those stable at high temperature.

They include polyolefinic polymers, polyamides, polycarbonates, ABS, polyphenylene oxides, polyalkyl acrylates, polyacetals, polysulphones, polyether sulphones, polyether imides, polyether ketones and fluororesin. These thermoplastic resins can be used either singly or in the form of a mixture of two or more of them.

The polyester resin of the present invention can be molded by any of ordinary melt molding methods. The intended effect of the invention can be exhibited particularly in the extrusion molding of films, sheets, monofilaments, fibres, rods and hollow pipes, particularly preferably films and sheets. The extrusion molding of films or sheets is conducted by either the inflation method or the T-die method. Scarcely any thermal decomposition product adheres to the slit-shaped nozzle, cooling roller or guide bar and the state of the surface of the produced film or sheet is stable and good.

The moldable polyester resin of the present invention containing a small amount of a specified comonomer component introduced thereinto by copolymerization has a remarkably improved thermal stability without substantial detriment to its thermal resistance. It forms only a very small amount of thermal decomposition products such as terephthalic acid in the course of molding of film or sheet and, therefore, a molding having an excellent processability and a high quality can be produced without forming any solid substance adherent to the molding devices such as extrusion nozzle and its surroundings, cooling roll or guide bar.

### Examples

The following non-limiting Examples further illustrate the present invention.

The thermal stability in a molten state was evaluated by quantitatively determining decomposition products formed in the melting step (330°C, 20 min) which are solid at ambient temperature and measuring the time taken for 10% weight reduction at 350°C. In the quantitative determination, about 5 g of the polymer was heated to melt on a closed hot plate at 330°C for 20 min and solid decomposition products (sublimate) formed from the molten polymer was cooled to solidify and collected and the amount thereof was given as the rate of formation of molten decomposition product in terms of % by weight based on the polymer.

### Examples 1 to 3

100 mol of (a) dimethyl terephthalate, and, in amounts specified in Table 1, (b) 1,4-cyclohexanedimethanol (cis-isomer/trans-isomer 25/75) and (c) ethylene oxide (2 mol) adduct of bisphenol A were fed together with 0.036 mol of tetrabutoxytitanium catalyst in a reactor provided with a stirrer, nitrogen-inlet tube and reflux distillation tube and stirred at 150°C in a nitrogen stream for 1 h. The temperature was slowly elevated and the mixture was stirred at 180 to 270°C for 3 h. The introduction of nitrogen was stopped and the pressure in the reactor was reduced while the temperature was slowly elevated to 315"C to attain 0.1 mm Hg after 1 h. The stirring was continued for 3 h under this pressure to obtain a polymer having a comonomer introduction rate given in Table 1. The intrinsic viscosity, melting point, rate of formation of melt-decomposition product at 330°C and time taken for 10% weight reduction at 350°C are given in Table 2.

Films were produced from these copolymers by meltrextrusion through a T-die slit at 310°C followed by rapid cooling on a roll at room temperature. Adhesion of solids to the surface of the cooling roll was observed and the results thereof are also given in Table 2.

### Examples 4 to 8

The same procedure as that of the Example 1 was repeated using 100 mol of (a) dimethyl terephthalate, 120 mol of (b) 1,4-cyclohexanedimethanol, 10 mol of (c) each comonomer listed in Table 1 and 0.036 mol of tetrabutoxytitanium as the catalyst to obtain a polymer having a comonomer introduction rate given in Table 1. The intrinsic viscosity, melting point, rate of formation of melt-decomposition product at 330°C and time taken for 10% weight reduction at 350°C are given in Table 2. Films were produced from these copolymers and the adhesion of solids was examined in the same manner as that of the Example 1 to obtain the results given in Table 2.

### Examples 9 and 10

The same procedure as that of the Example 1 was repeated using 100 mol of (a) dimethyl terephthalate, 120 mol of (b) 1,4-cyclohexanedimethanol having a cis-isomer to trans-isomer ratio specified in Table 1, 10 mol of (c) ethylene oxide (2 mol) adduct of bisphenol A and 0.036 mol of tetrabutoxytitanium as the catalyst to obtain a polymer having a comonomer introduction rate given in Table 1 and properties given in Table 2. Values indicating the melt decomposition behavior of the polymer and the results of the evaluation of solid adhesion observed in the film formation are also given in Table 2.

### Comparative Example 1

Polycyclohexylenedimethylene terephthalate homopolymer was produced under the same conditions as those of the Examples 1 to 10 except that no component (c) was added and then the melt decomposition product forming rate at 330°C and the time taken for 10% weight reduction at 350°C thereof were determined. The solid adhering to the roll surface during the production of a film by the T-die method was examined. The results are given in Table 2. The adherent solid substantially comprised terephthalic acid.

### Comparative Example 2

A polymer was produced in the same manner as that of the Example 2 except that 10 mol of triethylene glycol which does not belong to the (c) component of the present invention was used as the comonomer component, and then it was evaluated. The results are given in Table 2.

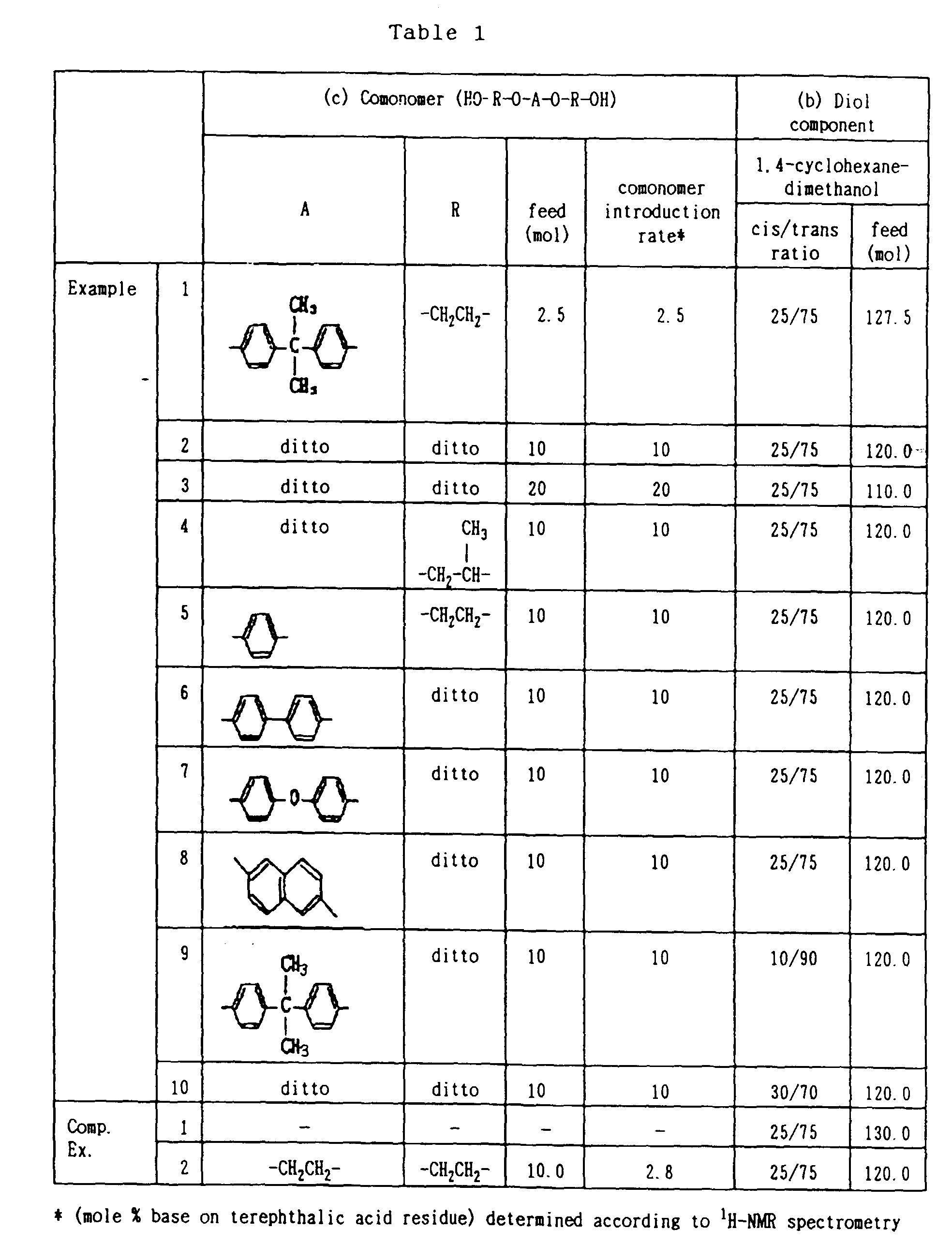

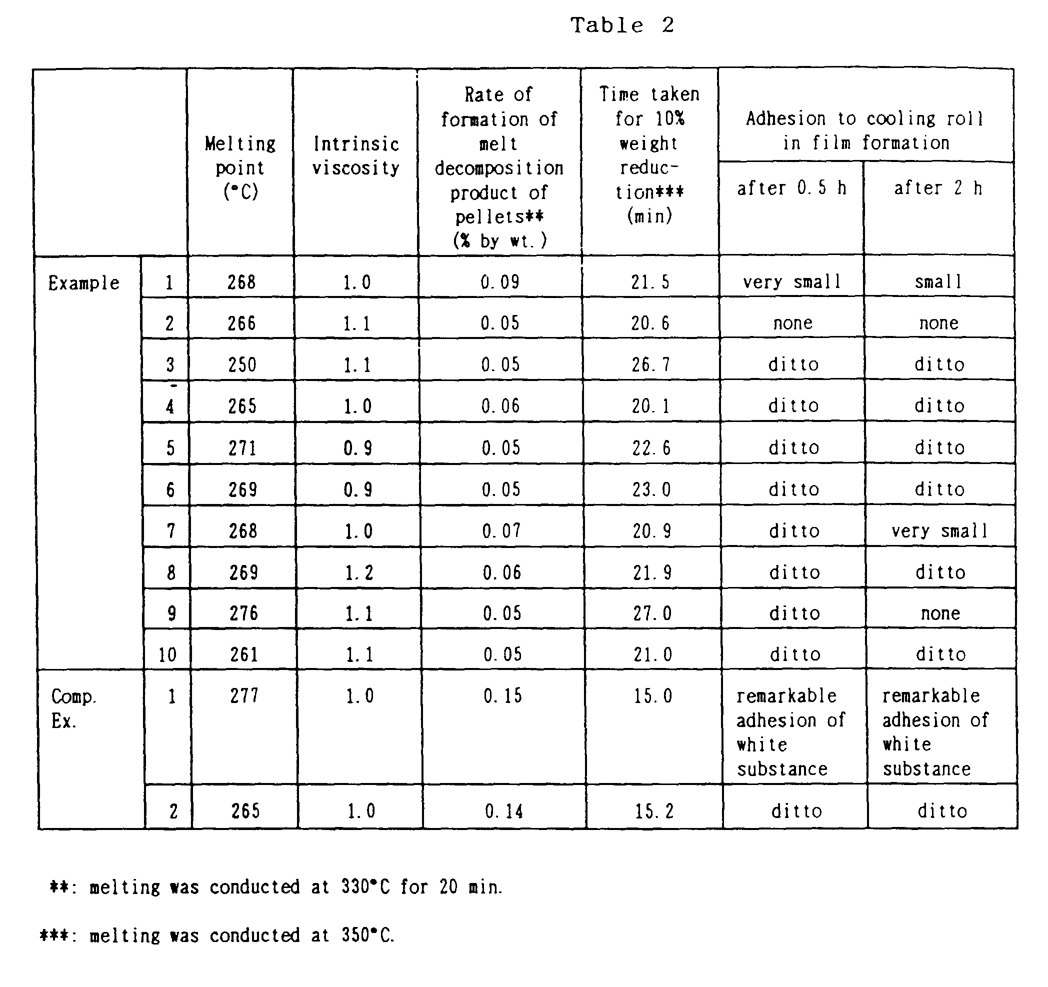

## Claims

1. A moldable polyester resin comprising as the main components
(a) an aromatic dicarboxylic acid or its ester-forming derivative, and
(b) an aliphatic dihydroxy component containing at least 35 mole % of 1,4-cyclohexanedimethanol, which resin is produced by copolymerizing components (a) and (b) with
(c) an ester-forming diol compound of the following general formula (I) in such an amount that 0.1 to 30 mole % thereof, based on the aromatic dicarboxylic acid group, is introduced into said resin,
HO-R-0-A-0-R-OH (I)
wherein A represents a divalent organic radical selected from the groups 2,2-bis(4-phenylene) propane,
4,4'-biphenylene, phenylene, oxy-4,4'-diphenylene or naphthylene and R is selected from an ethylene or isopropylene group.

2. A polyester resin according to Claim 1, wherein the amount of the 1,4-cyclohexanedimethanol is at least 50 mole %, based on the component (b).

3. A polyester resin according to Claim 1 or 2, wherein the weight ratio of the cis-isomer and trans-isomer of the 1,4-cyclohexanedimethanol is 40/60 to 0/100.

4. A polyester resin according to Claim 3, wherein the weight ratio of the cis-isomer and trans-isomer of the 1,4-cyclohexanedimethanol is 35/65 to 5/95.

5. A polyester resin according to any preceding claim, wherein the amount of the compound (c) is 0.5 to 20 mole %, based on the aromatic dicarboxylic acid.

6. A polyester resin according to any one of claims 1 to 5, wherein the compound (c) is selected from 2,2-bis[4-(2-hydroxyethoxy)phenylene]propane, 2,2-bis[4-(2-hydroxy-1-methylethoxy)-phenylene]propane and 4,4'-bis(2-hydroxyethoxy)biphenyl.

7. An extrusion molding produced by extrusion molding a polyester resin as claimed in any preceding claim.

8. An extrusion molding in the form of a film or sheet produced from a polyester resin as claimed in any of claims 1 to 6.

## Patentansprüche

1. Formbares Polyesterharz, umfassend als Hauptkomponenten
(a) eine aromatische Dicarbonsäure oder ein esterbildendes Derivat davon sowie
(b) eine aliphatische Dihydroxykomponente, die wenigstens 35 Mol-% 1,4-Cyclohexandimethanol enthält,
wobei das Harz hergestellt wird, indem man die Komponenten
(a) und (b) mit
(c) einer esterbildenden Diolverbindung der folgenden allgemeinen Formel (I) in einer solchen Menge copolymerisiert, daß 0,1 bis 30 Mol-% davon, bezogen auf die aromatische Dicarbonsäuregruppe, in das Harz eingeführt werden:
HO-R-O-A-O-R-OH (I),
wobei A einen zweiwertigen organischen Rest darstellt, der aus den Gruppen 2,2-Bis(4-phenylen)propan, 4,4'-Biphenylen, Phenylen, Oxy-4,4'-diphenylen oder Naphthylen ausgewählt ist, und R aus einer Ethylen- oder Isopropylengruppe ausgewählt ist.

2. Polyesterharz gemäß Anspruch 1, wobei die Menge des 1,4-Cyclohexandimethanols wenigstens 50 Mol-%, bezogen auf die Komponente (b), beträgt.

3. Polyesterharz gemäß Anspruch 1 oder 2, wobei das Gewichtsverhältnis zwischen cis-Isomer und trans-Isomer des 1,4-Cyclohexandimethanols 40/60 bis 0/100 beträgt.

4. Polyesterharz gemäß Anspruch 3, wobei das Gewichtsverhältnis zwischen cis-Isomer und trans-Isomer des 1,4-Cyclohexandimethanols 35/65 bis 5/95 beträgt.

5. Polyesterharz gemäß einem der vorstehenden Ansprüche, wobei die Menge der Verbindung (c) 0,5 bis 20 Mol-%, bezogen auf die aromatische Dicarbonsäure, beträgt.

6. Polyesterharz gemäß einem der Ansprüche 1 bis 5, wobei die Verbindung (c) aus 2,2-Bis [4- (2-hydroxyethoxy) phenylen]-propan, 2,2-Bis[4-(2-hydroxy-1-methylethoxy)phenylen]propan und 4,4'-Bis(2-hydroxyethoxy)biphenyl ausgewählt ist.

7. Extrusionsformteil, das durch Extrusionsformen eines Polyesterharzes gemäß einem der vorstehenden Ansprüche hergestellt ist.

8. Extrusionsformteil in Form einer Folie oder Platte, die aus einem Polyesterharz gemäß einem der Ansprüche 1 bis 6 hergestellt ist.

## Revendications

1. Résine polyester moulable, comprenant, comme ingrédients principaux,
(a) un acide dicarboxylique aromatique ou son dérivé formant un ester, et
(b) un constituant dihydroxylé aliphatique contenant au moins 35 % en moles de 1,4-cyclohexanediméthanol, cette résine étant produite en copolymérisant les constituants (a) et (b) avec
(c) un composé diol, formant un ester, de la formule générale (I) suivante, en une quantité telle que 0,1 à 30 % en moles de celui-ci, sur la base du groupe acide dicarboxylique aromatique, soient introduits dans ladite résine,
HO-R-O-A-O-R-OH (I)
dans laquelle A représente un radical organique divalent choisi parmi les groupes 2,2-bis(4-phénylène)propane, 4,4'-biphénylène, phénylène, oxy-4,4'-diphénylène ou naphtylène et R est choisi parmi les groupes éthylène et isopropylène.

2. Résine polyester selon la revendication 1, dans laquelle la quantité du 1,4-cyclohexanediméthanol est d'au moins 50 % en moles, sur la base du constituant (b).

3. Résine polyester selon la revendication 1 ou 2, dans laquelle le rapport pondéral de l'isomère cis et de l'isomère trans du 1,4-cyclohexanediméthanol est 40/60 à 0/100.

4. Résine polyester selon la revendication 3, dans laquelle le rapport pondéral de l'isomère cis et de l'isomère trans du 1,4-cyclohexanediméthanol est 35/65 à 5/95.

5. Résine polyester selon l'une quelconque des revendications précédentes, dans laquelle la quantité du constituant (c) est 0,5 à 20 % en moles, sur la base de l'acide dicarboxylique aromatique.

6. Résine polyester selon l'une quelconque des revendications 1 à 5, dans laquelle le composé (c) est choisi parmi le 2,2-bis[4-(2-hydroxyéthoxy)phénylène]-propane, le 2,2-bis[4-(2-hydroxy-1-méthyléthoxy)phénylène]-propane et le 4,4'-bis(2-hydroxyéthoxy)biphényle.

7. Pièce moulée par extrusion, produite en moulant par extrusion une résine polyester telle que revendiquée dans l'une quelconque des revendications précédentes.

8. Pièce moulée par extrusion sous la forme d'un film ou d'une feuille, produite à partir d'une résine polyester telle que revendiquée dans l'une quelconque des revendications 1 à 6.
